# EUROPÄISCHE PATENTSCHRIFT

(11) **EP 2 153 079 B1**
(45) Veröffentlichungstag und Bekanntmachung des Hinweises auf die Patenterteilung: **12.12.2012**
(21) Anmeldenummer: 08758180.7
(22) Anmeldetag: 13.06.2008
(51) Int. Cl.: F16D 3/72, F16D 3/64, F16F 15/124

(54) **ELASTISCHE WELLENKUPPLUNG MIT ADAPTIVER CHARAKTERISTIK**
ELASTIC SHAFT COUPLING WITH ADAPTIVE CHARACTERISTICS
ACCOUPLEMENT D'ARBRE ÉLASTIQUE À CARACTÉRISTIQUE ADAPTATIVE

(43) Veröffentlichungstag der Anmeldung: 17.02.2010
(60) Teilanmeldung: 12007229.3
(73) Patentinhaber: Centa-Antriebe Kirschey GmbH, 42781 Haan (DE)
(72) Erfinder: EXNER, Jochen, 53773 Hennef (DE)
(74) Vertreter: Roche, von Westernhagen & Ehresmann
(86) Internationale Anmeldenummer: PCT/DE2008/000963
(87) Internationale Veröffentlichungsnummer: WO 2009/149676

(56) Entgegenhaltungen:
- EP-A- 0 784 163
- EP-A- 1 788 269
- DE-A1-102006 053 282
- US-A- 5 315 203
- US-A- 6 069 433
- US-A1- 2002 139 603

## Beschreibung

Die Erfindung betrifft eine elastische Wellenkupplung mit einem rückstellelastischen Kupplungskörper und einer antriebsseitigen Befestigungseinrichtung, wie Befestigungsflansch zur Anordnung der Kupplung an einem Motorschwungrad, und einer abtriebsseitigen Befestigungseinrichtung, wie Befestigungsflansch zur Anordnung der Kupplung an einer Wellennabe.

Elastische Wellenkupplungen dieser Art sind in zahlreichen unterschiedlichen Ausführungsformen mit axialem Kraftfluss oder radialem Kraftfluss, mit einem oder mehreren rückstellelastischen Kupplungskörpern, die seriell oder parallel geschaltet sind, bekannt. Als Beispiel seien die druckschriftlich belegbaren Wellenkupplungen der DE 100 13 412 A1 oder DE 10 2005 055 605 A1 genannt.

Neben dem Ausgleich von radialem und/oder axialem Versatz von Antriebs- und Abtriebsaggregat dienen diese elastischen Wellenkupplungen insbesondere dazu, Drehschwingungen und Drehmomentspitzen zwischen an- und abgetriebenen Aggregaten aufzunehmen, wie sie beispielsweise durch den unrunden Lauf von Dieselmotoren entstehen.

Jede Kupplung ist auf einen bestimmten Betriebsbereich ausgelegt, in welchem sie die Drehschwingungen des Gesamtsystems besonders gut reduzieren kann. Bei bestimmten Anwendungen sind mehrere Kupplungen der eingangs genannten Art zusammengeschaltet, um beispielsweise über einen weiten Drehzahlbereich des Antriebs eine optimale Schwingungsdämpfung zu erreichen. Hier nimmt eine erste Kupplung die Drehschwingungen bei niedrigen Drehzahlen, eine zweite Kupplung die Drehschwingungen bei hohen Drehzahlen auf. Als Beispiel für eine solche Kupplungsanordnung sei EP 0 626 523 B1 genannt, bei welcher eine Kupplungsstufe mit linearer Kennlinie und eine Kupplungsstufe mit progressiver Kennlinie zu einer zweistufigen Kupplungsanordnung zusammengeschaltet sind. So lässt sich eine Kupplung schaffen, die Drehschwingungen über einen weiten Betriebsbereich des Antriebs ausgleichen kann.

Zweistufige Kupplungen, die sich die Wirkung unterschiedlicher Kennlinien der Kupplungskörper zur Drehschwingungskompensation zunutze zu machen, erfüllen ihre Aufgabe im wesentlichen sehr zuverlässig, weisen jedoch das Problem auf, dass einerseits auch hier der Betriebs-bereich des Gesamtsystems immer noch beschränkt ist durch die Summe der Betriebsbereiche des jeweiligen Kupplungskörpers und andererseits die Drehschwingungskompensation im Übergangsbereich von einer zur anderen Kupplungsstufe noch verbesserungswürdig ist.

Aus EP 0784163 A1 ist mit einem Dämpfungssystem für Kraftfahrzeuge ein heterogener Stand der Technik bekannt geworden, der sich eines magnetorheologischen Elastomers bedient. Mittels dieses Elastomers lassen sich die Dämpfungseigenschaften an bestimmte Anforderungen wie z.B. Ladung oder Straßenverhältnisse anpassen.

Aus DE 10 2006 053 282 A1 ist eine elastische Wellenkupplung bekannt, in dessen Kupplungselement ein Sensor eingebettet ist. Mittels dieses Sensors lassen sich die Betriebs- und Belastungszustände des Kupplungselementes messen.

Aus US 5,315,203 ist ein Dämpfungssystem bekannt, welches sich piezoelektrischer und viskoelastischer Elemente bedient.

Aufgabe der Erfindung ist es deshalb, eine Kupplung zu schaffen, welche Drehschwingungen in einem weiten Frequenzbereich wirksam reduzieren kann.

Diese Aufgabe löst eine elastische Wellenkupplung mit den Merkmalen des Anspruches 1.

Die erfindungsgemäßen Stellelemente erlauben es, die Steifigkeit des stellelastischen Materials des zweiten Kupplungskörpers aktiv zu beeinflussen bzw. verändern. Dies hat den wesentlichen Vorteil, dass die Gegenschwing- bzw. Tilgermasse über ein weites Frequenzband von Drehschwingungen anpassbar ist. Hierdurch lassen sich Drehschwingungen besonders gut kompensieren. In Folge dessen können insbesondere aus dem Stand der Technik bekannte zwei- oder mehrstufige Kupplungsanordnungen zukünftig in ihrem Aufbau vereinfacht werden.

Es ist dabei von wesentlichem Vorteil, wenn die Stellelemente direkt in den Kupplungskörper eingebettet sind, um den Aufbau des Kupplungskörpers an sich einfach zu halten.

Konkret wirken die Stellelemente auf die Eigenelastizität des zweiten rückstellelastischen Körpers und verändern diese. Dabei ist insbesondere vorgesehen, dass die Eigenelastizität des zweiten rückstellelastischen Körpers mittels der Stellelemente verringerbar ist. Dies erlaubt es, Einsatzbereiche abzudecken, bei denen sowohl sehr drehweiche, also hochelastische Kupplunggelemente Verwendung fanden, die mit steifen bis sehr steifen Kupplungselementen zu mehrstufigen Kupplungsanordnungen zusammengefasst waren. Je nach momentanem Betriebszustand der Kupplung wird zur Drehschwingungskompensation die Elastizität des zweiten Kupplungskörpers erhöht, bzw. bei Bedarf wieder verringert.

Hierzu ist ein Wirkelement vorgesehen, welches die Stellelemente beeinflusst, wobei es aufgrund der Rotationsbewegung des Kupplungskörpers von wesentlichem Vorteil ist, wenn das Wirkelement die Stellelemente kontaktlos beeinflusst.

Zur aktiven Regelung der elastischen Wellenkupplung ist ein Sensorelement vorgesehen, welches den Betriebszustand der Kupplung, insbesondere die Drehschwingung, erfasst, wobei bei einer besonders bevorzugten Ausführungsform der Erfindung vorgesehen ist, dass die Stellelemente, das Wirkelement und der Sensor Teil eines Regelkreises sind, der die Elastizität des zweiten rückstellelastischen Körpers mittels des Vergleichs eines Sollwertes und eines Istwertes der Drehschwingung der Wellenkupplung beeinflusst.

Es ist vorgesehen, dass die Stellelemente Piezoelemente sind, wobei insbesondere daran gedacht ist, dass in den rückstellelastischen Kupplungskörper Piezoelemente, als Stellelemente eingebettet sind.

Der Einsatz von Piezoelementen hat den wesentlichen Vorteil, dass diese direkt in den rückstellelastischen Körper, insbesondere in einen Elastomer, eingebettet werden können. Hierbei wird der Effekt genutzt, dass bestimmte Kristalle, Quarze oder industriell hergestellte Sinterkeramiken bei Verformung ein elektrisches Feld zwischen zwei Polen erzeugen, bzw. sich beim inversen Piezoeffekt aufgrund einer anliegenden Spannung verformen. Infolge dessen kann durch Anlegen einer Spannung eine Verformung der Piezoelemente innerhalb des zweiten rückstellelastischen Kupplungskörpers erreicht werden, die einem Drehschwingungsimpuls entgegengerichtet ist und diesen im Optimalfalle mittels der Tilgermasse gänzlich tilgt.

Um die Stellwege und die Stellkraft zu erhöhen, ist vorgesehen, dass die Piezoelemente zu Stapeln (Stacks) zusammengesetzt sind.

Bei einer besonders bevorzugten Ausführungsform ist vorgesehen, dass ein Teil der in einem Stapel aneinandergereihten Piezoelemente als Sensor dienen und den Drehschwingungsistwert erfassen und die übrigen Piezoelemente als Aktor zur Tilgung der Drehschwingung dienen. Hierbei nutzt die Erfindung sowohl den Piezo- wie auch den inversen Piezoeffekt.

Der wesentliche Vorteil dieser Ausführungsform liegt darin, dass das Stellelement Sensor und Aktor in sich vereinigt. Ein externer Sensor, der den Drehschwingungs-Istzustand der Kupplung erfasst, wird so überflüssig.

Diese Kupplungsbauform macht sich weiterhin die Tatsache zu nutze, dass zwischen dem Auftreten von ersten Drehschwingungsimpulsen und deren mechanischer Wirkung ein Zeitverzug existiert. Innerhalb dieses Zeitverzuges lässt sich der Istwert erfassen, mit dem Sollwert vergleichen und der zur Schwingungstilgung notwendige Gegenimpuls auslösen.

Weitere Vorteile der Erfindung ergeben sich aus der nachfolgenden Beschreibung verschiedener Ausführungsbeispiele. Es zeigen:
- Fig. 1: schematische Teildarstellung eines bekannten Kupplungselementes,
- Fig. 2: grafische Darstellung der Resonanzlage des Kupplungselementes in Fig. 1 in Abhängigkeit von der Frequenz,
- Fig. 3: schematische Teildarstellung eines erfindungsgemäßen Kupplungselements,
- Fig. 4: die grafische Darstellung der Wirkung der erfindungsgemäßen Stellelemente auf die Resonanzlage des Kupplungselementes gemäß Fig. 3 in Abhängigkeit der Frequenz
- Fig. 5: schematische Darstellung der Anordnung von Stellelementen innerhalb des Kupplungskörpers,
- Fig. 6: schematische Darstellung der Beeinflussung der Drehschwingung durch eine in ihrer Wirkung regelbare Tilgermasse.

In den Figuren ist ein Kupplungskörper einer elastischen Wellenkupplung insgesamt mit der Bezugsziffer 10 versehen.

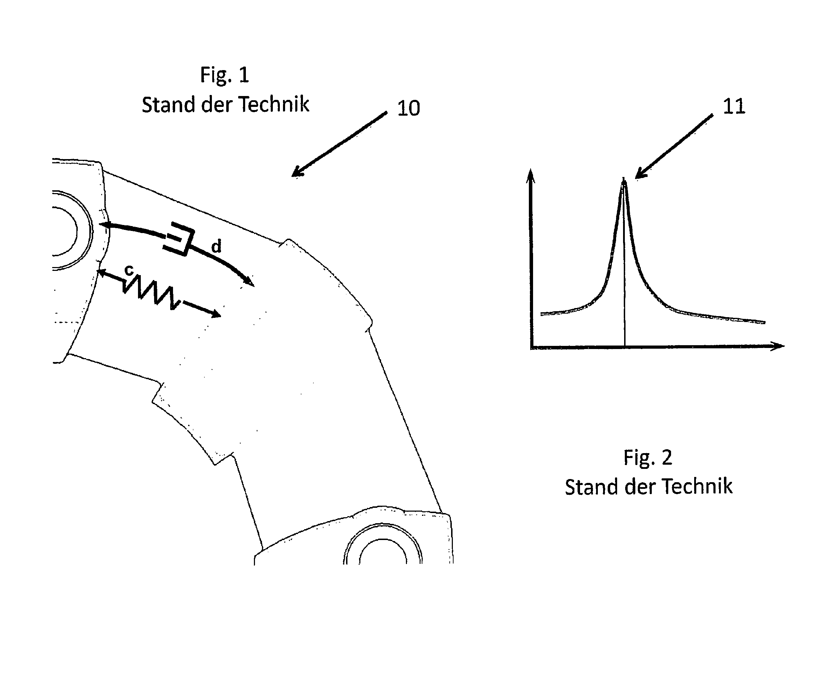

Der Kupplungskörper 10 des Standes der Technik, welcher in Fig. 1 dargestellt ist, besteht aus einem rückstellelastischen Material, vorzugsweise aus einem Elastomer. Dieser Elastomer weist in Abhängigkeit von seiner Zusammensetzung eine feste Elastizität c und eine feste Dämpfung d auf.

Das Frequenzdiagramm der Fig.2 zeigt einen möglichen Drehschwingungsverlauf des Kupplungskörpers in Fig. 1 in Abhängigkeit der Frequenz. Auf der X-Achse lässt sich die Frequenz bzw. die Drehzahl anordnen, auf der Y-Achse die Vergrößerungsfunktion, das heißt, allgemein Drehmoment, Kraft oder Weg. Bei 11 existiert eine maximale Überhöhung der Schwingungsamplitude, die in einer realen Anlage zu vermeiden ist. Man wählt in der Regel eine über- oder unterkritische Lage der Betriebsbereiche zu dieser Resonanz. Die Frequenzlage ist für eine Kupplung nach Fig. 1 fest.

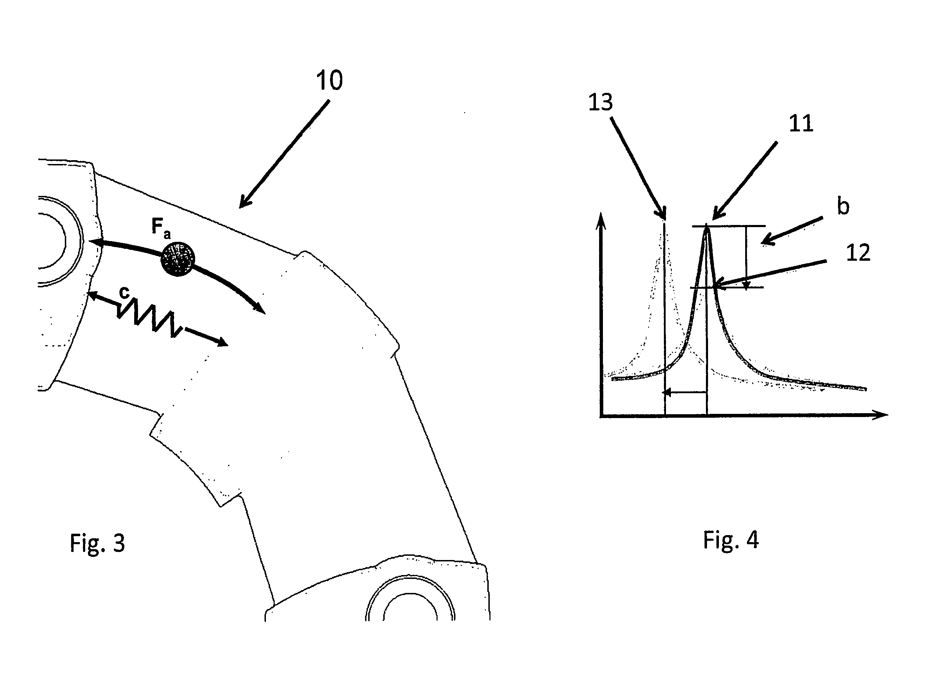

In den erfindungsgemäßen Kupplungskörper der Fig. 3 ist ein Stellglied Fₐ eingebettet. Dieses Stellglied lässt sich aktivieren und steuern. Durch die gesteuerte Aktivierung des Stellgliedes Fₐ kann die Resonanzlage beeinflusst werden. Dieses führt gemäß Fig. 4 zu einer Beeinflussung der Elastizität und/oder der Dämpfung d. Die Resonanzlage kann dadurch variabel in Abhängigkeit von augenblicklichen Betriebsbereichen verschoben werden. Falls eine Resonanzlage nicht zu vermeiden ist, kann die Amplitudenüberhöhung durch Anpassen der Dämpfung gemindert werden.

In Fig. 4 ist dargestellt, dass das die Überhöhung im Resonanzfall 11 um den Betrag b auf die reduzierte Überhöhung 12 durch Aktivieren des Stellgliedes Fₐ abgesenkt wird. Dies bedeutet, dass das Stellglied Fₐ durch Aktivierung die Dämpfung d des Kupplungskörpers 10 erhöht. Weiterhin ist in Fig. 4 dargestellt, dass anstelle einer Erhöhung der Dämpfung die Elastizität veränderbar ist. Hier bewirkt das Stellglied Fₐ eine Verlagerung der Frequenzlage der Resonanz 11 entlang der X-Achse zur neuen Lage 13. Bezüglich Fig. 4 ist zu beachten, dass es sich hier um eine statische Darstellung handelt und in einem dynamischen Antriebssystem mit elastischer Wellenkupplung in der Regel Mischzustände im Frequenzspektrum auftreten. Je nach Situation kann der Einfluss auf die Elastizität und/oder Dämpfung an den Anwendungsfall angepasst werden.

Um mittels eines Stellgliedes die Dämpfung bzw. die Elastizität des Kupplungskörpers 10 verändern zu können, wird der Kupplungskörper 10 erfindungsgemäß wie folgt weiter gebildet:

Bei einem ersten Ausführungsbeispiel der Erfindung werden in das Elastomermaterial, insbesondere ist hier Gummi vorgesehen, magnetische Partikel eingelagert. Während der Vulkanisation des Kupplungskörpers wird ein magnetisches Feld angelegt, so dass die Partikel gleichgerichtet werden und so die Elastizität durch einen Basiswert 1 wenigstens in eine Richtung vorgegeben ist. Nach Abschluss der Vulkanisation wird das Magnetfeld aufgehoben. Damit wird die Gleichrichtung der Partikel aufgehoben und die Elastizität durch Behinderung der Gleitebenen auf einen erhöhten Wert 2 verändert.. Man erhält einen magnetorheologischen Elastomer, der sich durch erneutes Anlegen eines magnetischen Feldes bezüglich seiner Steifigkeit proportional und reversibel verändern lässt.

Im Betrieb einer elastischen Wellenkupplung wirken sich die in den Elastomer eingebetteten Stellglieder zunächst nicht weiter aus. Um die Elastizität und/oder die Dämpfung des Kupplungskörpers 10 gezielt zu beeinflussen, ist dessen Integration in einen Regelkreis notwendig. Vorgesehen ist ein Sensor, der die Drehschwingung des Systems erfasst, ein Wirkelement, insbesondere ein regelbarer Elektromagnet, der die magnetischen Partikel aktiviert und eine zentrale Steuereinheit, die den Istwert mit einem vorgegebenen Sollwert vergleicht und mittels des Elektromagneten die Stärke des Magnetfeldes und so die Stärke der Anregung bzw. Ausrichtung der magnetischen Partikel bestimmt.

Durch Integration magnetischer Partikel in den Kupplungskörper und somit durch Bildung eines magnetorheologischen Elastomers und dessen Einbindung in einen entsprechenden Regelkreis wird eine adaptive Kupplung geschaffen, die durch Beeinflussung der Elastizität und der Dämpfung des Elastomers Drehschwingungen in einem gegenüber dem Stand der Technik erweiterten Betriebsbereich wirksam tilgen kann.

Bei einer alternativen Ausführungsform ist vorgesehen, Stellglieder in Form von Piezoelementen in den aus einem Elastomer gebildeten Kupplungskörper 10 einzubetten. Solche Piezoelemente verformen sich bei Anlegen einer elektrischen Spannung bzw. erzeugen eine elektrische Spannung bei Verformung. Bekannt sind verschiedene Kristalle, Quarze oder industriell herstellbare Sinterkeramiken, die Piezoeigenschaften aufweisen.

Idealerweise sind mehrere Piezoelemente aufeinandergeschichtet und zu einem Stapel bzw. Stack zusammengesetzt. Solche Stapel erlauben große Stellwege und außerordentlich große Stellkräfte. Die bei dieser Ausführungsform als Stellglieder genutzten Piezoelemente sind hinsichtlich ihrer Wirkrichtung innerhalb des Elastomers auszurichten. Denkbar ist es, eine solche Baueinheit, im Zug- oder Druckmodus, bezogen auf die Verformung des Kupplungskörpers 10, zu betreiben. Ebenso wäre ein Schubmodus denkbar. Ziel ist es, die Piezoelemente so innerhalb des Elastomers auszurichten, dass diese den dynamischen Betriebskräften direkt oder indirekt entgegen wirken können.

Auch eine elastische Wellenkupplung mit in den Kupplungskörper 10 eingebetteten Piezoelementen ist Teil eines Regelkreises. Wie schon vorbeschrieben werden die Drehschwingungen von einem geeigneten Sensor erfasst, eine zentrale Steuerung vergleicht diesen Wert mit einem Sollwert und aktiviert die Piezoelemente durch Anlegen einer Spannung in einem die Drehschwingung im optimalen Falle vollständig austilgendem Maße. Bei dieser Ausführungsform können einige der gegebenenfalls in einem Stack zusammengefassten Piezoelemente als Sensor dienen. Diese werden durch Drehschwingungsimpulse verformt, wobei die erzeugte Spannung ein Maß für die Stärke des Schwingungsimpulses ist. Über den Regelkreis lassen sich die als Aktor dienenden Piezoelemente zur Schwingungstilgung ansteuern.

Eine dritte Ausführungsform bedient sich einer aktiv steuerbaren Tilgermasse, um Drehschwingungen im Antriebsstrang zu vermeiden.

Grundsätzlich ist es bei rotierenden Systemen bekannt, einen rotierenden Körper mit einer Tilgermasse, auch Gegenschwingmasse genannt, zu versehen, die in einem bestimmten Betriebszustand bzw. über einen bestimmten Betriebsbereich hinweg aufgrund ihrer Eigenschwingung die Drehschwingung des Rotationskörpers in gewissem Maße auslöscht. Solche starr mit dem rotierenden Körper verbundene Tilgermassen finden sich beispielsweise an Schwungrädern von Motoren.

Bei der dritten, beanspruchten Ausführungsform der Erfindung wird ein Kupplungskörper 10 aus dem Stand der Technik über ein Verbindungselement um eine solche Tilgermasse ergänzt. Das Verbindungselement ist nunmehr als rückstellelastischer Kupplungskörper im Sinne seiner kuppelnden Eigenschaften von elastischer Wellenkupplung und Tilgermasse anzusehen. Dieses Verbindungselement kann entweder als magnetorheologischer Elastomer ausgestaltet sein und somit - wie vorbeschrieben - Stellglieder in Form von magnetischen Partikeln aufweisen oder weist Stellglieder in Form von Piezoelementen auf. In beiden Fällen lässt sich die Elastizität und/oder Dämpfung des Verbindungselementes beeinflussen, so dass in Abhängigkeit von der Drehschwingung im Antriebsstrang die zur Tilgung notwendige Gegenschwingung der Tilgermasse regelbar ist.

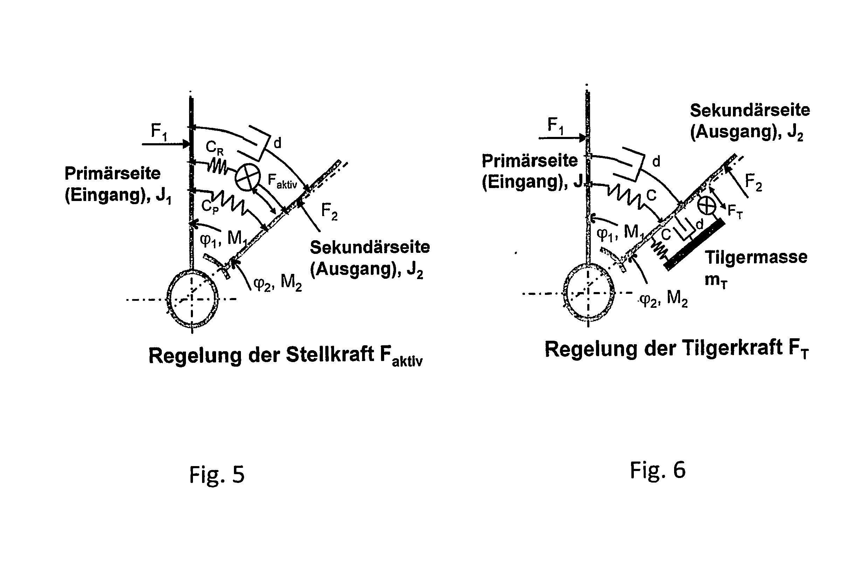

Die Fig. 5 und 6 zeigen schematisch die mögliche Anordnung von Stellgliedern Fₐ in Bezug zur Grundelastizität c und zur Grunddämpfung d. In Fig. 5 sind Ausführungsformen schematisch dargestellt, bei welchen die Stellglieder in den den Kupplungskörper bildenden Elastomer eingebettet sind. Hierbei kann es sich, wie oben bereits beschrieben, um Piezoelemente oder magnetische Partikel handeln.

Fₐ kann zur Elastizität c in Reihe angeordnet sein, was in Fig. 5 durch die Elastizität Cᵣ und das nachgeschaltete Stellglied Fₐ symbolisiert ist. Genau so gut ist es jedoch möglich, dass auf Cᵣ verzichtet wird und das Stellglied Fa parallel zur Elastizität Cp wirkt. Auch die Kombination ist möglich.

In Fig. 6 ist schematisch die dritte Ausführungsform dargestellt, bei welcher eine Tilgermasse m_{T} mit dem Kupplungskörper 10 über ein Verbindungselement gekoppelt ist. Dieses Verbindungselement ist wiederum ein Elastomer, in welchem Stellglieder F_{T} eingebettet sind. Diese beeinflussen die Dämpfung d und/oder die Elastizität c des rückstellelastischen Verbindungselementes um die Schwingungsfrequenz der Tilgermasse derart zu beeinflussen, dass sie die Drehschwingung im Antriebsstrang auslöscht bzw. reduziert.

Zusammenfassend betrifft die Erfindung eine weiter entwickelte elastische Wellenkupplung, welche auf die Tilgung der Drehschwingung in einem bestimmten Betriebszustand des Antriebsstranges ausgelegt ist. Die elastische Wellenkupplung wird durch Hinzufügen von Stellgliedern, die in den Elastomer eingebettet oder mit diesem kombiniert sind zu einer adaptiven Kupplung weiter entwickelt, welche durch Einbindung der Stellglieder in einen Regelkreis Drehschwingungen in verschiedenen Betriebszuständen der Kupplung tilgen kann. Dabei lässt sich durch eine entsprechende Regellogik theoretisch zu jeder Schwingungsfrequenz eine die Schwingung auslöschende Elastizität oder Dämpfung realisieren. Hierdurch können die Vibrationen im Antriebsstrang über einen weiten Drehzahlbereich sicher unterbunden werden, was sich vorteilhaft auf die Lebensdauer von beispielsweise über die elastische Wellenkupplung mit Dieselmotoren verbundene Getriebe auswirkt.

### Bezugszeichen:

- 10: Kupplungskörper
- 11: Drehschwingungsmaximum
- 12: Drehschwingungsmaximum
- 13: Drehschwingungsmaximum
- 20: Metallscheibe
- 21: Metallscheibe

- c: Elastizität
- d: Dämpfung
- Fₐ: Stellglied
- F_{T}: Stellglied
- b: Betrag

## Patentansprüche

1. Elastische Wellenkupplung mit einem rückstellelastischen Kupplungskörper (10) und einer antriebsseitigen Befestigungseinrichtung, wie Befestigungsflansch (20) zur Anordnung der Kupplung an einem Motorschwungrad, und einer abtriebsseitigen Befestigungseinrichtung, wie Befestigungsflansch (21) zur Anordnung der Kupplung an einer Wellennabe, **dadurch gekennzeichnet, dass** der Kupplungskörper (10) über ein Verbindungselement mit einer die Drehschwingung tilgenden Masse gekoppelt ist, dass das Verbindungselement ein zweiter rückstellelastischer Kupplungskörper ist, der in seiner Steifigkeit mittels Stellelementen beeinflussbar ist, wobei die Stellelemente auf den zweiten rückstellelastischen Kupplungskörper so wirken, daβ die Fähigkeit zur Drehschwingungskompensation der Wellenkupplung beeinflussbar ist, und dass die Stellelemente Piezoelemente sind.

2. Elastische Wellenkupplung nach Anspruch 1, **dadurch gekennzeichnet, dass** die Stellelemente in den zweiten Kupplungskörper eingebettet sind.

3. Elastische Wellenkupplung nach Anspruch 1 oder 2, **dadurch gekennzeichnet, dass** die Eigenelastizität des zweiten rückstellelastischen Kupplungskörpers mittels der Stellelemente innerhalb eines Bereiches stufenlos oder gestuft beeinflussbar ist.

4. Elastische Wellenkupplung nach einem der Ansprüche 1 bis 3, **dadurch gekennzeichnet, dass** die Eigenelastizität des zweiten rückstellelastischen Kupplungskörpers mittels der Stellelemente verringert oder vergrößert wird.

5. Elastische Wellenkupplung nach einem der vorhergehenden Ansprüche, **dadurch gekennzeichnet, dass** ein Wirkelement vorgesehen ist, welches die Stellelemente beeinflusst.

6. Elastische Wellenkupplung nach Anspruch 5, **dadurch gekennzeichnet, dass** das Wirkelement die Stellelemente kontaktlos beeinflusst.

7. Elastische Wellenkupplung nach einem der Ansprüche 5 oder 6, **dadurch gekennzeichnet, dass** ein Sensorelement vorgesehen ist, welches den Betriebszustand der Wellenkupplung erfasst.

8. Elastische Wellenkupplung nach Anspruch 7, **dadurch gekennzeichnet, dass** die Stellelemente, das Wirkelement und der Sensor Teil eines Regelkreises sind, der die Elastizität des zweiten rückstellelastischen Kupplungskörpers mittels des Vergleichs eines Sollwertes und eines Istwertes der Drehschwingung der Wellenkupplung beeinflusst.

9. Elastische Wellenkupplung nach Anspruch 1
**dadurch gekennzeichnet, dass** die Piezoelemente zu Stapeln (Stacks) zusammengesetzt sind.

10. Elastische Wellenkupplung nach Anspruch 9, **dadurch gekennzeichnet, dass** ein Teil in einem Stapel aneinandergereihte Piezoelemente als Sensor dienen und den Drehschwingungsistwert erfassen und die übrigen Piezoelemente als Aktor zur Tilgung der Drehschwingung dienen.

11. Elastische Wellenkupplung nach einem der vorhergehenden
Ansprüche, **dadurch gekennzeichnet, dass** der zweite Kupplungskörper ein Elastomer ist.

12. Elastische Wellenkupplung nach Anspruch 1 und 9, **dadurch gekennzeichnet, dass** zu Stapeln (Stacks) zusammengesetzte Piezoelemente in einer als Aktor dienenden separaten Baueinheit zusammengefasst sind.

13. Elastische Wellenkupplung nach Anspruch 12, **dadurch gekennzeichnet, dass** der direkte Aktor auf den zweiten Kupplungskörper wirkt.

## Claims

1. An elastic shaft coupling having a reset-elastic coupling body (10) and a fastening device on the driving side, such as fastening flange (20) for arranging the coupling on a motor flywheel and a fastening device on the output side, such as fastening flange (21) for arranging the coupling on a shaft hub, **characterized in that** the coupling body (10) is coupled to a mass absorbing the torsional vibration via a connecting element, **in that** the connecting element is a second reset-elastic coupling body which can be influenced in its stiffness by means of actuating elements, wherein the actuating elements act on the second reset-elastic coupling body such that the capability for the torsional vibration compensation of the shaft coupling can be influenced, and that the actuating elements are piezo elements.

2. The elastic shaft coupling according to Claim 1, **characterized in that** the actuating elements are embedded in the second coupling body.

3. The elastic shaft coupling according to Claim 1 or 2, **characterized in that** the intrinsic elasticity of the second reset-elastic coupling body can be influenced within a range in a stepless or stepped manner by means of the actuating elements.

4. The elastic shaft coupling according to any one of the Claims 1 to 3, **characterized in that** the intrinsic elasticity of the second reset-elastic coupling body is reduced or increased by means of the actuating elements.

5. The elastic shaft coupling according to any one of the preceding claims, **characterized in that** an active element is provided which influences the actuating elements.

6. The elastic shaft coupling according to Claim 5, **characterized in that** the active element contactlessly influences the actuating elements.

7. The elastic shaft coupling according to any one of the Claims 5 or 6, **characterized in that** a sensor element is provided, which senses the operating state of the shaft coupling.

8. The elastic shaft coupling according to Claim 7, **characterized in that** the actuating elements, the active element and the sensor are part of a control loop, which influences the elasticity of the second reset-elastic coupling body by means of the comparison of a setpoint value and of an actual value of the torsional vibration of the shaft coupling.

9. The elastic shaft coupling according to Claim 1, **characterized in that** the piezo elements are assembled into stacks.

10. The elastic shaft coupling according to Claim 9, **characterized in that** a part of piezo elements arranged in a line one after the other in a stack serve as sensor and sense the torsional vibration actual value and the remaining piezo elements serve as actuator for absorbing the torsional vibration.

11. The elastic shaft coupling according to any one of the preceding claims, **characterized in that** the second coupling body is an elastomer.

12. The elastic shaft coupling according to Claim 1 and 9, **characterized in that** piezo elements assembled into stacks are combined in a separate unit serving as actuator.

13. The elastic shaft coupling according to Claim 12, **characterized in that** the direct actuator acts on the second coupling body.

## Revendications

1. Accouplement d'arbre élastique comportant un corps d'accouplement à force de rappel élastique (10) et un dispositif de fixation du côté d'entraînement, comme une bride de fixation (20) pour disposer l'accouplement sur un volant de moteur, et un dispositif de fixation du côté d'arbre de sortie, comme une bride de fixation (21) pour disposer l'accouplement sur un bossage d'arbre, **caractérisé en ce que** le corps d'accouplement (10) est couplé par l'intermédiaire d'un élément de liaison à une masse amortissant la vibration de torsion, **en ce que** l'élément de liaison est un deuxième corps d'accouplement à force de rappel élastique, qui peut être influencé dans sa rigidité au moyen d'éléments de réglage, dans lequel les éléments de réglage agissent sur le corps d'accouplement à force de rappel élastique, **en ce que** l'aptitude à la compensation de vibration de torsion de l'accouplement d'arbre peut être influencée, et **en ce que** les éléments de réglage sont des éléments piézo.

2. Accouplement d'arbre élastique selon la revendication 1, **caractérisé en ce que** les éléments de réglage sont incorporés dans le deuxième corps d'accouplement.

3. Accouplement d'arbre élastique selon les revendications 1 ou 2, **caractérisé en ce que** l'élasticité propre du deuxième corps d'accouplement à force de rappel élastique peut être influencée en continu ou graduellement au moyen des éléments de réglage à l'intérieur d'une zone.

4. Accouplement d'arbre élastique selon une des revendications 1 à 3, **caractérisé en ce que** l'élasticité propre du deuxième corps d'accouplement à force de rappel élastique est diminuée ou augmentée au moyen des éléments de réglage.

5. Accouplement d'arbre élastique selon une des revendications précédentes, **caractérisé en ce que** un élément opérationnel est prévu, qui influence les éléments de réglage.

6. Accouplement d'arbre élastique selon la revendication 5, **caractérisé en ce que** l'élément opérationnel influence les éléments de réglage sans contact.

7. Accouplement d'arbre élastique selon une des revendications 5 ou 6, **caractérisé en ce que** un élément de capteur est prévu, qui détecte l'état de fonctionnement de l'accouplement d'arbre.

8. Accouplement d'arbre élastique selon la revendication 7, **caractérisé en ce que** les éléments de réglage, l'élément opérationnel et le capteur font partie d'un circuit de régulation, qui influence l'élasticité du deuxième corps d'accouplement à force de rappel élastique au moyen de la comparaison d'une valeur de consigne et d'une valeur effective de la vibration de torsion de l'accouplement d'arbre.

9. Accouplement d'arbre élastique selon la revendication 1, **caractérisé en ce que** les éléments piézo sont assemblés en piles.

10. Accouplement d'arbre élastique selon la revendication 9, **caractérisé en ce que** une partie des éléments piézo empilés dans une pile sert de capteur et détecte la valeur effective de vibration de torsion et les éléments piézo restants servent à amortir la vibration de torsion.

11. Accouplement d'arbre élastique selon une des revendications précédentes, **caractérisé en ce que** le deuxième corps d'accouplement est un élastomère.

12. Accouplement d'arbre élastique selon les revendications 1 et 9, **caractérisé en ce que** les éléments piézo assemblés en piles sont assemblés en un composant séparé servant d'actionneur.

13. Accouplement d'arbre élastique selon la revendication 12, **caractérisé en ce que** l'actionneur direct agit sur le deuxième corps d'accouplement.
